# EUROPEAN PATENT APPLICATION

(11) **EP 4 806 321 A1**
(43) Date of publication of application: **16.09.2026**
(21) Application number: 25899438.3
(22) Date of filing: 21.11.2025
(51) Int. Cl.: A47L 11/24, G01N 29/04

(54) **CLEANING ROBOT AND MATERIAL IDENTIFICATION METHOD AND CONTROL METHOD THEREFOR, PROCESSOR, AND CLEANING SYSTEM**

(30) Priority: 04.12.2024 CN 202411776938
(71) Applicant: Dreame Innovation Technology (Suzhou) Co., Ltd., Suzhou, Jiangsu 215000 (CN)
(72) Inventor: LIN, Bin, Suzhou, Jiangsu 215000 (CN); XU, Yinbo, Suzhou, Jiangsu 215000 (CN); SUN, Wei, Suzhou, Jiangsu 215000 (CN); LIU, Jintao, Suzhou, Jiangsu 215000 (CN)
(74) Representative: Gill Jennings & Every LLP
(86) International application number: PCT/CN2025/136933
(87) International publication number: WO 2026/118918

(57) **Abstract**

The present application provides a cleaning robot and a material identification method, a control method, and a processor therefor, and a cleaning system, which relate to the technical field of autonomous mobile robots. The material identification method includes: determining a material category of the target surface on the basis of a first parameter of the echo signal detected by the detection device, wherein the first parameter is configured to characterize an integral area of an envelope curve corresponding to the echo signal with respect to a time axis. The method of the present application can reduce the influence of interference peaks on a determination result, thereby improving the accuracy of material determination.

## Description

The present application claims the priority to Chinese Patent Application No. 202411776938.2, filed with the China National Intellectual Property Administration on December 04, 2024 and entitled "CLEANING ROBOT AND MATERIAL IDENTIFICATION METHOD, CONTROL METHOD, AND PROCESSOR THEREFOR, AND CLEANING SYSTEM", which is incorporated herein by reference in its entirety.

### TECHNICAL FIELD

The present application relates to the technical field of intelligent robots, and in particular to a cleaning robot and a material identification method, a control method, and a processor therefor, and a cleaning system.

### BACKGROUND

During operation, autonomous mobile robots typically detect material information of obstacles or target surfaces to be cleaned along travel paths by means of detection devices. The most commonly used detection device is an ultrasonic detection device.

After transmitting and receiving ultrasonic waves to/from obstacles or target surfaces to be cleaned, conventional ultrasonic detection devices typically process and convert the ultrasonic waves to obtain analog voltage curves varying over time, analog voltage curves of different shapes may be obtained depending on different materials, and thus the types of the obstacles or the target surfaces can be determined on the basis of peaks in the analog voltage curves.

However, echoes generated in the above method may contain peaks caused by unexpected energy reflections, resulting in inaccurate determination of voltage values of the echo peaks and inaccurate identification of flooring materials.

### SUMMARY

Embodiments of the present application provide a cleaning robot and a material identification method, a control method, and a processor therefor, and a cleaning system, to achieve the effect that where echoes may contain peaks caused by unexpected energy reflections, resulting in inaccurate determination of voltage values of the echo peaks and inaccurate identification of flooring materials.

In a first aspect, the present application provides a material identification method for a cleaning robot, where the robot includes a detection device configured to transmit an ultrasonic signal to a target surface to be cleaned, and to receive an echo signal returned from the target surface; and the method includes:
determining a material category of the target surface on the basis of a first parameter of the echo signal detected by the detection device, where the first parameter is configured to characterize an integral area of an envelope curve corresponding to the echo signal with respect to a time axis.

According to the method of the present application, the integral area corresponding to the envelope curve of the ultrasonic wave is matched with a preset material category corresponding to a preset integral area, to determine the material category corresponding to a curve formed by a current ultrasonic wave. This can reduce the influence of interference peaks on determination results, and thus improve the accuracy of material determination compared with a determination method based on peaks or troughs and the like.

In a possible implementation, the first parameter includes:
the integral area of the envelope curve corresponding to the echo signal with respect to the time axis;
or an incremental percentage corresponding to the integral area of the envelope curve corresponding to the echo signal with respect to the time axis.

In this embodiment, a specific area parameter is defined for determining the material category. The area parameter may be the area directly calculated from a corresponding curve graph to directly obtain the area corresponding to a curve graph of the same material, or may be based on the normalized area corresponding to the curve graph to reduce the degree of differentiation between the areas corresponding to different materials and improve the accuracy of detection results.

In a possible implementation, the integral area is determined on the basis of M echoes, where M is greater than or equal to 2.

In this embodiment, an integral segment region of the envelope curve is defined. In general, the larger the integral area, the higher the accuracy of matching of the corresponding material category. Moreover, since the envelope curve is mainly determined by a plurality of echoes, the greater the number of echoes, the larger the corresponding integral area. Therefore, the integral area for determination can be defined by defining the number of echoes.

In a possible implementation, the integral area includes:
an integral area of a corresponding continuous curve segment between a peak of the first echo and an end point of the second echo among the M echoes;
or an integral area of a corresponding continuous curve segment between a start point of the first echo to the end point of the second echo among the M echoes.

In this embodiment, the front and rear positions of the echoes are defined. Since a waveform includes a start point, a peak and an end point of an echo, when the number of echoes is limited, the start point and the end point of the integral area can be limited on the basis of the position of the waveform, and it is only required to correspond the start point and the end point of an actually detected integral area to the start point and the end point of the integral area corresponding to the preset material category on a one-to-one basis.

In a possible implementation, the M echoes include a primary echo and a secondary echo.

Due to the higher intensity of the first two echoes, the corresponding integral areas are also larger, and thus it is easier to obtain the integral area corresponding to the preset material category, making the identification result more accurate.

In a possible implementation, M is greater than 2, and the integral area includes:
an integral area of a corresponding continuous curve segment between a peak of the first echo and a peak of the last echo among the M echoes;
or an integral area of a corresponding continuous curve segment between a start point of the first echo and the peak of the last echo among the M echoes;
or an integral area of a corresponding continuous curve segment between the peak of the first echo and an end point of the last echo among the M echoes;
or an integral area of a corresponding continuous curve segment between the start point of the first echo to the end point of the last echo among the M echoes.

This embodiment defines how to select the integral area corresponding to the echo in the case of more than two echoes, which is similar to the case of two echoes, except only that the length range from the start point to the end point of the integral area is expanded; and for the preset material category as a reference, the integral area corresponding to the corresponding positions of the start and end points also needs to be increased.

In a possible implementation, the M echoes include a primary echo, a secondary echo and a tertiary echo.

While the identification accuracy can be improved by using the integral area corresponding to the tertiary echo, compared with the method for determining the material by using the integral area of only two echoes, the interference of impure peaks such as ultrasonic ringing in the previous echoes can be further reduced, and the accuracy of the determination result can be improved.

In a possible implementation, the integral area is determined on the basis of all echo signals.

Since peaks caused by unexpected energy reflections such as vibrations during excitation and ringing at the cessation of excitation may be obtained during the transmission of ultrasonic waves, these fluctuations are themselves unrelated to the material, but when the reference preset material category includes the integral area of all peaks after comparison, the area of all the peaks obviously includes the integral area of this part, that is, only the integral area of the echoes being used in the above embodiment is not sufficient, and the positions of the start and end points of the integral area need to be further extended to cover all the echo signals.

In a possible implementation, the first parameter includes: an incremental percentage; and the method further includes:
obtaining the integral area of the envelope curve corresponding to the echo signal with respect to the time axis; and
normalizing the integral area of the envelope curve corresponding to the echo signal with respect to the time axis to obtain the incremental percentage.

This embodiment further defines how to determine the incremental percentage of the integral area, and converting the absolute value of the area into the normalized percentage can further be improve the accuracy of the obtained integral area, and the confidence of the material determination result can be improved.

In a possible implementation, normalizing the integral area of the envelope curve corresponding to the echo signal with respect to the time axis includes:
determining a first integral difference on the basis of a difference between the integral area of the envelope curve corresponding to the echo signal with respect to the time axis and a preset first integral area, where the preset first integral area is an integral area of an envelope curve corresponding to an echo signal, which is sent and received by the detection device after transmitting to a completely absorbing target surface to be cleaned, with respect to the time axis;
determining a second integral difference on the basis of a difference between a preset second integral area and the preset first integral area, where the preset second integral area is an integral area of an envelope curve corresponding to an echo signal, which is received by the detection device after transmitting to a completely non-absorbing target surface to be cleaned, with respect to the time axis; and
obtaining a normalized value on the basis of a ratio of the first integral difference to the second integral difference.

This embodiment specifically defines how to perform the normalization processing, and specifies that such normalization processing is carried out under the conditions of complete absorption and complete non-absorption of the same ultrasonic wave, and the processing method is relatively reliable, thereby improving the credibility of the material determination result.

In a second aspect, the present application provides a processor for a cleaning robot, where the robot includes a detection device communicatively connected to the processor;
the detection device is configured to transmit an ultrasonic signal to a target surface to be cleaned, and to receive an echo signal returned from the target surface; and
the processor includes:
   an acquisition module for acquiring the echo signal detected by the detection device; and
   a processing module for determining a material category of the target surface on the basis of a first parameter of the echo signal detected by the detection device, where the first parameter is configured to characterize an integral area of an envelope curve corresponding to the echo signal with respect to a time axis.

In a possible implementation, the first parameter includes:
the integral area of the envelope curve corresponding to the echo signal with respect to the time axis;
or an incremental percentage corresponding to the integral area of the envelope curve corresponding to the echo signal with respect to the time axis.

In a possible implementation, the integral area is determined on the basis of M echoes, where M is greater than or equal to 2.

In a possible implementation, the integral area includes:
an integral area of a corresponding continuous curve segment between a peak of the first echo and an end point of the second echo among the M echoes;
or an integral area of a corresponding continuous curve segment between a start point of the first echo to the end point of the second echo among the M echoes.

In a possible implementation, the M echoes include a primary echo and a secondary echo.

In a possible implementation, M is greater than 2, and the integral area includes:
an integral area of a corresponding continuous curve segment between a peak of the first echo and a peak of the last echo among the M echoes;
or an integral area of a corresponding continuous curve segment between a start point of the first echo and the peak of the last echo among the M echoes;
or an integral area of a corresponding continuous curve segment between the peak of the first echo and an end point of the last echo among the M echoes;
or an integral area of a corresponding continuous curve segment between the start point of the first echo to the end point of the last echo among the M echoes.

In a possible implementation, the M echoes include a primary echo, a secondary echo and a tertiary echo.

In a possible implementation, the integral area is determined on the basis of all echo signals.

In a possible implementation, the first parameter includes: an incremental percentage; and the method further includes:
obtaining the integral area of the envelope curve corresponding to the echo signal with respect to the time axis; and
normalizing the integral area of the envelope curve corresponding to the echo signal with respect to the time axis to obtain the incremental percentage.

In a possible implementation, normalizing the integral area of the envelope curve corresponding to the echo signal with respect to the time axis includes:
determining a first integral difference on the basis of a difference between the integral area of the envelope curve corresponding to the echo signal with respect to the time axis and a preset first integral area, where the preset first integral area is an integral area of an envelope curve corresponding to an echo signal, which is sent and received by the detection device after transmitting to a completely absorbing target surface to be cleaned, with respect to the time axis;
determining a second integral difference on the basis of a difference between a preset second integral area and the preset first integral area, where the preset second integral area is an integral area of an envelope curve corresponding to an echo signal, which is received by the detection device after transmitting to a completely non-absorbing target surface to be cleaned, with respect to the time axis; and
obtaining a normalized value on the basis of a ratio of the first integral difference to the second integral difference.

In a third aspect, the present application provides a control method for a cleaning robot, where the robot includes a detection device configured to transmit an ultrasonic signal to a target surface to be cleaned, and to receive an echo signal returned from the target surface; and the method includes:
determining a material category of the target surface on the basis of a material identification method for a cleaning robot described above during execution of a target task on the target surface, where the target task includes at least a cleaning task or a mapping task; and
executing the target task on the target surface on the basis of the material category of the target surface.

In a fourth aspect, the present application provides a cleaning robot, which includes a detection device, a processor communicatively connected to the detection device, and a memory communicatively connected to the processor, where
the detection device is configured to transmit an ultrasonic signal to a target surface to be cleaned, and to receive an echo signal returned from the target surface;
the memory is configured to store computer-executable instructions; and
the processor is configured to execute the computer-executable instructions stored in the memory on the basis of a detection result of the detection device, to implement a control method for a cleaning robot described above.

In a fifth aspect, the present application provides a cleaning system, which includes a cleaning robot and a user terminal, where the robot is communicatively connected to the user terminal; and
the cleaning robot is further configured to send material information of the target surface to the user terminal on the basis of the determined material category of the target surface.

In a possible implementation, a presentation form of the material information of the target surface on the user terminal includes at least one of the following:
text information of a material, image information of the material, or voice information of the material.

In a sixth aspect, the present application provides a computer-readable storage medium, which stores computer-executable instructions. The computer-executable instructions are configured to, when executed by a processor, implement a control method for a robot.

In a seventh aspect, the present application provides a computer program product, which includes a computer program. The computer program implements, when executed by a processor, a control method for a robot.

The cleaning robot and the material identification method, the control method, and the processor therefor, and the cleaning system provided by the present application determine the material category of the target surface on the basis of a first parameter of the echo signal detected by the detection device, where the first parameter is configured to characterize the integral area of the envelope curve corresponding to the echo signal with respect to the time axis. With regard to the defect in the prior art that the material category is determined on the basis of the number of peaks or troughs, the present application can decrease the integral area of peaks caused by unexpected energy reflections by utilizing the integral area of the echo peaks, and thus reduce the influence of interference peaks on determination results, thereby improving the accuracy of material determination.

### BRIEF DESCRIPTION OF DRAWINGS

The drawings herein, which are incorporated into the specification and constitute a part of the specification, illustrate embodiments that conform to the present application and are used together with the specification to explain the principles of the present application.
FIG. 1 is a schematic diagram of an envelope curve according to an embodiment, with a carpet material misjudged as a floor.
FIG. 2 is a schematic diagram of an application scenario of a material identification method for a cleaning robot according to an embodiment of the present application.
FIG. 3 is a schematic diagram of a carpet envelope curve detected by an ultrasonic detection device according to an embodiment of the present application.
FIG. 4 is a schematic diagram of a tile envelope curve detected by the ultrasonic detection device according to an embodiment of the present application.
FIG. 5 is a schematic diagram of a tile envelope curve, which includes unexpected energy reflections, detected by the ultrasonic detection device according to an embodiment of the present application.
FIG. 6 is a schematic diagram of a possible scenario where peaks are caused by unexpected energy reflections according to an embodiment of the present application.
FIG. 7 is a schematic flowchart of a normalization processing method according to an embodiment of the present application.
FIG. 8 is a structural schematic diagram of a processor for a cleaning robot according to an embodiment of the present application.
FIG. 9 is a structural schematic diagram of hardware of the cleaning robot according to an embodiment of the present application.
FIG. 10 is a structural schematic diagram of a cleaning system according to an embodiment of the present application.

Specific embodiments of the present application have been shown by the drawings, which will be described below in more detail. These drawings and textual description are not intended to limit the scope of the concept of the present application in any way, but rather to illustrate the concept of the present application for a person skilled in the art by reference to specific embodiments.

### DESCRIPTION OF EMBODIMENTS

Exemplary embodiments are described in detail herein, with examples shown in the accompanying drawings. When the following description relates to the accompanying drawings, the same numbers in different accompanying drawings represent the same or similar elements, unless specified otherwise. Implementations described in the following exemplary embodiments do not represent all implementations consistent with the present application. Instead, the implementations are merely examples of apparatuses and methods consistent with some aspects of the present application as detailed in the appended claims.

When an autonomous mobile cleaning robot is required to clean a target area to be cleaned, the cleaning robot can traverse the area along a travel path to improve a cleaning effect without missing any area to be cleaned. In the present application, the cleaning robot has a self-moving function, including but not limited to a sweeping robot, a vacuum cleaner, a sweeping and mopping integrated machine, etc.

Taking the sweeping robot as an example, when a room is to be cleaned, it is necessary to execute different cleaning strategies on different flooring materials.

For example, for a carpet, dirt is more strongly attached thereon, and thus a greater suction force is required. Moreover, the carpet should not be wet-cleaned as much as possible to prevent the dirtiness of the carpet from being exacerbated. The suction force setting may not be differentiated for solid wood floors and tiles. However, since solid wood floors may suffer from deterioration caused by water absorption, when the solid wood floors and the tiles are wet-cleaned, measures such as decreasing the amount of sprayed water are needed to minimize the adverse effect of wet cleaning on the solid wood floors.

Therefore, the cleaning robot needs to identify a material in the area to be cleaned before cleaning, to determine a suitable cleaning mode to improve the cleaning quality.

It should be understood that by "before cleaning" here refers to before actual cleaning, including but not limited to a mapping period of the cleaning robot and a moment before the cleaning robot actually starts cleaning.

A conventional flooring material identification method mainly uses a detection device for detection and identification. The detection device includes, but is not limited to, an ultrasonic detection device, a laser detection device, a visual detection device, etc. The ultrasonic detection device has lower costs and can distinguish most common materials. The laser detection device may be a laser distance sensor (abbreviated as LDS) or a direct Time OF Flight (abbreviated as dTOF), which can identify materials and give distance information, but the cost of these sensors is typically higher. The visual detection device includes at least a camera and has certain requirements on a focal length for the camera, thus leading to the problems of high device costs and the demand for adapting a position setting to an identification design. Therefore, among the conventional detection devices, the ultrasonic detection device is most easily applied in the aspect of material identification.

By way of example, the ultrasonic detection device mainly includes an ultrasonic transducer. The ultrasonic transducer is a device that can convert input electrical power into mechanical power (i.e., ultrasonic waves) and transmit same out and can also convert the input mechanical power (i.e., the ultrasonic waves) into the electrical power. For example, when a flooring material is detected, the ultrasonic waves are transmitted to the flooring mainly by the ultrasonic transducer, and echoes returned from the flooring are then received and analyzed to obtain the change in electrical signals of the ultrasonic transducer during this period.

The electrical signals may be discrete digital voltage values. An analog digital converter (ADC) performs sampling at a predetermined time step t to obtain a series of discrete digital voltage values, for example, {V1, V2, V3, ..., Vn}, a difference between adjacent Vn and Vn-1 in the horizontal axis is the time step t, and an integral area can be obtained by integration. Therefore, the ADC converts an analog voltage curve into discrete digital voltage signals.

The conventional ultrasonic detection device is likely to make an erroneous determination when identifying the material, resulting in poor compatibility and limited application range. By analyzing the change in the electrical signals in case of the erroneous determination, it is found that the electrical signals are voltage values that vary over time, these voltage values form a plurality of peaks and troughs, different materials have different peaks and troughs, and thus matching material information can be obtained by comparing the position information of the peaks.

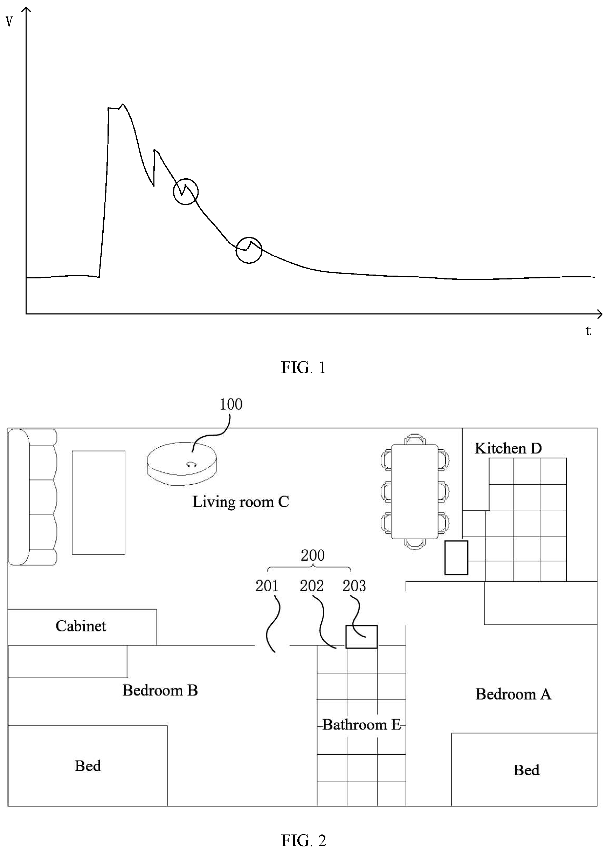

FIG. 1 is a schematic diagram of an envelope curve according to an embodiment, with a carpet material misjudged as a floor. As shown in FIG. 1, the envelope curve has four peaks which confirm to the echo peak characteristics of a floor, and thus the carpet material is determined as a floor material. However, the envelope curve shows actually the echo peaks of a carpet, and therefore this peak determination method is not accurate.

In view of the technical problems described above, the inventive concept of the present application lies in: calculating the peak area of echo peaks of an envelope curve of a detected unknown material, comparing same with the peak area of echo peaks of an envelope curve of a known material, and selecting the known material with the same peak area as an identification result of the unknown material for output, so as to solve the above technical problem in the prior art.

A specific application scenario of the present application is as follows:
FIG. 2 is a schematic diagram of an application scenario of a material identification method for a cleaning robot according to an embodiment of the present application. As shown in FIG. 2, flooring conditions of different materials are provided in a room 200, for example, a wooden floor 201, tiles 202 and a carpet 203. When intelligently cleaning the room 200, a sweeping and mopping integrated machine 100 performs different cleaning actions depending on different materials. For example, when wet cleaning is performed, the wooden floor 201 is more likely to absorb water compared with the tiles 202, and the carpet 203 does not need wet cleaning, otherwise, the dirtiness of the carpet 203 will be exacerbated. Therefore, when moving onto the wooden floor 201, the tiles 202 and the carpet 203, it is necessary to determine the type of the flooring material by means of a detection device installed on the sweeping and mopping integrated machine 100, and then the water output amount of the sweeping and mopping integrated machine 100 is controlled according to the type of the material, such that the sweeping and mopping integrated machine 100 can clean a variety of materials during a single cleaning task and achieve a better cleaning effect.

The technical solutions of the present application and how the technical solutions of the present application solve the foregoing technical problem are described in detail below by using specific examples. The following specific embodiments may be combined with each other, and a same or similar concept or process may not be repeated in some embodiments. The embodiments of the present application will be described below with reference to the drawings.

An ultrasonic transducer is driven to vibrate by an electrical circuit and transmits ultrasonic waves to a material to be detected. If only air is present between the ultrasonic transducer and the material without obstructions, after the ultrasonic waves are transmitted onto the material, part of the ultrasonic waves is absorbed by the material, the remaining ultrasonic waves are reflected back to the ultrasonic transducer by the material, and the reflected ultrasonic waves are referred to as echoes. The softer the material, the more ultrasonic waves are absorbed, the less ultrasonic waves are reflected back; and the harder the material, the more ultrasonic waves are reflected back.

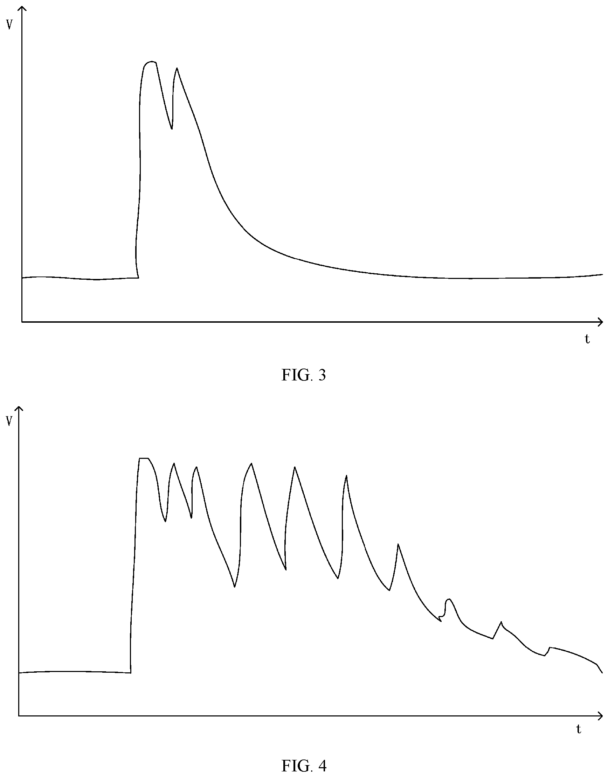

FIG. 3 is a schematic diagram of a carpet envelope curve detected by an ultrasonic detection device according to an embodiment of the present application. The carpet is a soft material, after the ultrasonic waves are transmitted to the carpet, the envelope curve may not have echo peaks because the soft material can absorb the ultrasonic waves. However, as shown in FIG. 3, the envelope curve still has two relatively large peaks, which are mainly caused by vibrations generated when the ultrasonic detection device transmits the ultrasonic waves. For example, a first peak shown in FIG. 3 indicates the vibration during excitation, and a second peak indicates the ringing at the cessation of excitation.

It should be understood that when the stability of the ultrasonic detection device is high, the two peaks shown in FIG. 3 may be absent. In this case, the carpet envelope curve detected by the ultrasonic detection device is a nearly horizontal curve without peaks.

FIG. 4 is a schematic diagram of a tile envelope curve detected by the ultrasonic detection device according to an embodiment of the present application. A tile is a hard material, and after the ultrasonic waves are transmitted to the tile, echo peaks are present in the envelope curve because the hard material does not absorb the ultrasonic waves. As shown in FIG. 4 which is a schematic diagram of the tile envelope curve detected by the same ultrasonic detection device as that for the schematic diagram of the envelope curve shown in FIG. 3, in view of the presence of two relatively large non-echo peaks in FIG. 3, the first two peaks in FIG. 4 are also non-echo peaks. Therefore, the third peak may be taken as a primary echo peak, and the fourth peak and the fifth peak, etc. are taken as a secondary echo peak, a tertiary echo peaks, etc. in sequence.

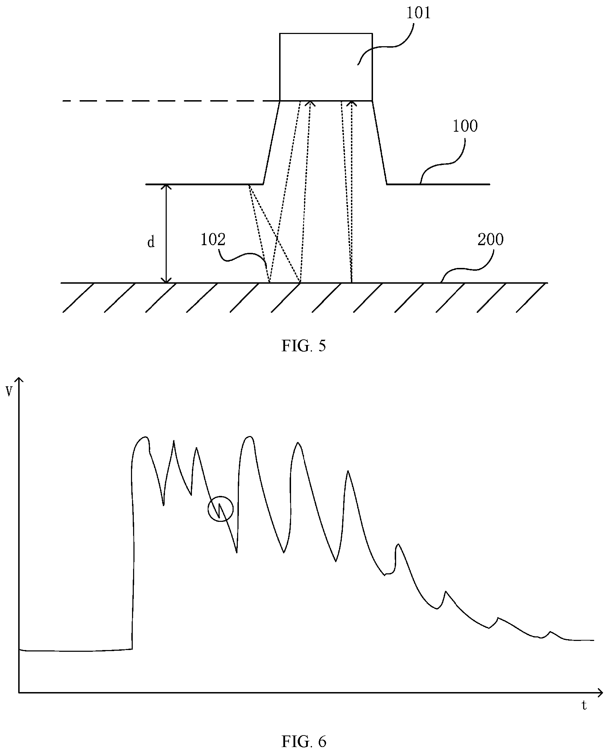

FIG. 5 is a schematic diagram of a tile envelope curve, which includes unexpected energy reflections, detected by the ultrasonic detection device according to an embodiment of the present application. Comparing FIG. 4 with FIG. 5, although the materials detected are of the same type, the numbers of their peaks are inconsistent, which is mainly caused by the peaks generated by the unexpected energy reflections.

FIG. 6 is a schematic diagram of a possible scenario where peaks are caused by unexpected energy reflections according to an embodiment of the present application. As shown in FIG. 6, the ultrasonic detection device 101 is mounted to the bottom of the cleaning robot 100, and when the ultrasonic detection device 101 transmits ultrasonic waves 102 to a flooring 200, the ultrasonic waves are then reflected back to the ultrasonic detection device 101, but the ultrasonic waves 102 may be first reflected onto a bottom mounting plate of the cleaning robot 100, then reflected back to the flooring from the bottom mounting plate and later reflected back to the ultrasonic detection device 101 from the flooring. When the bottom mounting plate of the cleaning robot 100 is at a distance d from the flooring, the ultrasonic waves 102 travel by an additional distance of about 2d compared to the case of the direct reflection. This is reflected as an echo signal reception time delay in the envelope curve, for example, an interference peak in the circle shown in FIG. 5.

With continued reference to FIGS. 4 and 5, although the numbers of their peaks are different, the overall integral areas corresponding to the echo peaks do not differ significantly. Therefore, the integral area of the peaks may be used to distinguish different types of materials, thereby mitigating the misleading effect of peaks caused by the unexpected energy reflections.

On the basis of the solution described above, in the present application, a processor is provided on the cleaning robot. The processor may include one or more circuits or chips having a control function. For example, when the processor is configured as a micro-control unit (MCU), the ADC may be built in the MCU, or the ADC may be separated from the MCU.

The processor is configured to control the work of a scrubber and respond to user's operations by means of various software control programs stored in a memory.

An execution subject of the embodiment of the present application may be the processor in the cleaning robot or a server corresponding to the cleaning robot. The server is located in the cloud, is connected to the processor of the cleaning robot via a network, issues control instructions to the cleaning robot, or forwards control instructions sent by a user via a terminal device to the cleaning robot, etc.

In some embodiments, the cleaning robot is further provided with a storage component. The processor and the storage component may be disposed inside the cleaning robot. Optionally, the storage component may be integrated with the processor, or the storage component and the processor may be two separate components.

The storage component is configured to store data, for example, the various software control programs, some modes and/or parameters of the cleaning robot, etc. Specifically, the program may include a program code, which includes computer operation instructions.

The technical solutions of the present application and how the technical solutions of the present application solve the foregoing technical problem will be described in detail below by taking an example in which the execution subject is a processor of the sweeping and mopping integrated machine. The following specific embodiments may be combined with each other, and a same or similar concept or process may not be repeated in some embodiments.

An exemplary method for determining the type of a flooring material on the basis of an integral area includes:
determining a material category of a target surface to be cleaned on the basis of a first parameter of the echo signal detected by the detection device.

The first parameter is configured to characterize an integral area of an envelope curve corresponding to the echo signal with respect to a time axis.

Optionally, the first parameter includes:
the integral area of the envelope curve corresponding to the echo signal with respect to the time axis;
or an incremental percentage corresponding to the integral area of the envelope curve corresponding to the echo signal with respect to the time axis.

Specifically, the integral area is calculated mainly by multiplying voltages corresponding to the discrete digital voltage values by a time step, for example, the discrete digital voltage values are {V1, V2, V3, ... , Vn}, and an area calculation method may be as follows: S = V1 * t + V2 * t + V3 * t + ... + Vn * t. The smaller the step t, the closer the resulting S value is to the area of a real curve.

Therefore, the integral area calculated within the same time range is constrained to the peaks. Accordingly, the obtained integral area corresponds to the selection of a time period.

It should be understood that when the integral area of an envelope curve of an unknown type with respect to the time axis is determined by using the integral area of an envelope curve of a known material type with respect to the time axis, a reference basis can only be established by restricting the determination to the same time period, and start and end times of the time period may be selected by referring to the following methods:

### Method 1: The integral area is determined on the basis of two echoes.

For example, the integral area is an integral area of a corresponding continuous curve segment between a peak of any first echo and an end point of the second echo among at least two echoes.

For another example, the integral area is an integral area of a corresponding continuous curve segment between a start point of the first echo to an end point of the second echo among the two echoes.

Optionally, the integral area is an integral area of a corresponding continuous curve segment between a primary echo and a secondary echo having stronger echo signals selected as the two echoes. Due to the higher intensity of the first two echoes, the corresponding integral areas are also larger, and thus it is easier to obtain the integral area corresponding to the preset material category, making the identification result more accurate.

In this embodiment, the front and rear positions of the echoes are defined. Since a waveform includes a start point, a peak and an end point of an echo, when the number of echoes is limited, the start point and the end point of the integral area can be limited on the basis of the position of the waveform, and it is only required to correspond the start point and the end point of an actually detected integral area to the start point and the end point of the integral area corresponding to the preset material category on a one-to-one basis.

### Method 2: The integral area is determined on the basis of at least two echoes.

For example, the integral area is an integral area of a corresponding continuous curve segment between a peak of the first echo and a peak of the last echo among three echoes;
or an integral area of a corresponding continuous curve segment between a start point of the first echo and the peak of the last echo among the three echoes;
or an integral area of a corresponding continuous curve segment between the peak of the first echo and an end point of the last echo among the three echoes;
or an integral area of a corresponding continuous curve segment between the start point of the first echo to the end point of the last echo among the three echoes.

Optionally, the three echoes selected are primary, secondary and tertiary echoes having stronger echo signals. The strong echo signal corresponds to a large peak area, and thus the identification result can be more accurate.

### Method 3: The integral area is determined on the basis of all echo signals.

Since peaks caused by unexpected energy reflections such as vibrations during excitation and ringing at the cessation of excitation may be obtained during the transmission of ultrasonic waves, these fluctuations are themselves unrelated to the material, but when the reference preset material category includes the integral area of all peaks after comparison, the area of all the peaks obviously includes the integral area of this part, that is, only the integral area of the echoes being used in the above embodiment is not sufficient, and the positions of the start and end points of the integral area need to be further extended to cover all the echo signals.

In some embodiments, in addition to the above methods for calculating the integral area, the calculated integral area may be accurately processed by a normalization method.

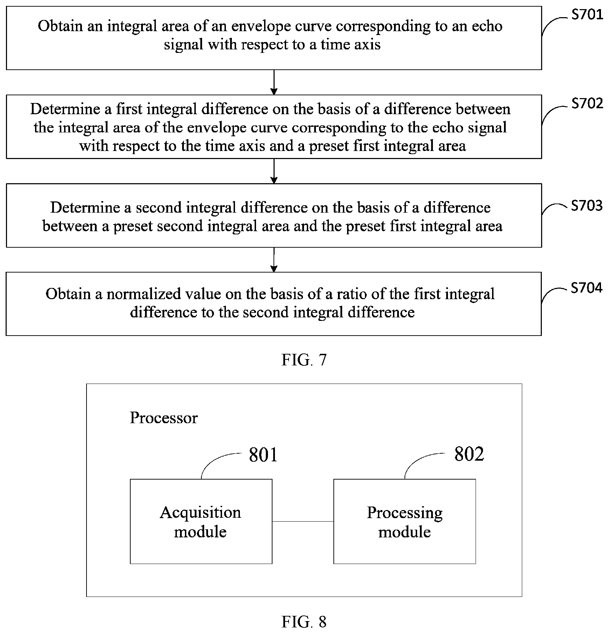

FIG. 7 is a schematic flowchart of a normalization processing method according to an embodiment of the present application. Specifically, as shown in FIG. 7, the normalization method includes the following steps:
In step S701, the integral area of the envelope curve corresponding to the echo signal with respect to the time axis is obtained.
In step S702, a first integral difference is determined on the basis of a difference between the integral area of the envelope curve corresponding to the echo signal with respect to the time axis and a preset first integral area.

The preset first integral area is an integral area of an envelope curve corresponding to an echo signal, which is sent and received by the detection device after transmitting to a completely absorbing target surface to be cleaned, with respect to the time axis.

In step S703, a second integral difference is determined on the basis of a difference between a preset second integral area and the preset first integral area.

The preset second integral area is an integral area of an envelope curve corresponding to an echo signal, which is received by the detection device after transmitting to a completely non-absorbing target surface to be cleaned, with respect to the time axis.

In step S704, a normalized value is obtained on the basis of a ratio of the first integral difference to the second integral difference.

Specifically, the integral area of the envelope curve corresponding to the echo signal, from the target surface of an unknown material and detected by the detection device, with respect to the time axis is, and a normalized value P may be calculated using the following equation:
In the equation, the integral area of the envelope curve corresponding to the echo signal from the target surface of the unknown material with respect to the time axis is represented by S, the first integral area is represented by F, and the second integral area is represented by C.

FIG. 8 is a structural schematic diagram of a processor for a cleaning robot according to an embodiment of the present application. As shown in FIG. 8, the processor includes:
an acquisition module 801 for acquiring an echo signal detected by the detection device; and
a processing module 802 for determining a material category of the target surface on the basis of a first parameter of the echo signal detected by the detection device. The first parameter is configured to characterize an integral area of an envelope curve corresponding to the echo signal with respect to a time axis.

In a possible implementation, the first parameter includes:
the integral area of the envelope curve corresponding to the echo signal with respect to the time axis;
or an incremental percentage corresponding to the integral area of the envelope curve corresponding to the echo signal with respect to the time axis.

In a possible implementation, the integral area is determined on the basis of M echoes, where M is greater than or equal to 2.

In a possible implementation, the integral area includes:
an integral area of a corresponding continuous curve segment between a peak of the first echo and an end point of the second echo among the M echoes;
or an integral area of a corresponding continuous curve segment between a start point of the first echo to the end point of the second echo among the M echoes.

In a possible implementation, the M echoes include a primary echo and a secondary echo.

In a possible implementation, M is greater than 2, and the integral area includes:
an integral area of a corresponding continuous curve segment between a peak of the first echo and a peak of the last echo among the M echoes;
or an integral area of a corresponding continuous curve segment between a start point of the first echo and the peak of the last echo among the M echoes;
or an integral area of a corresponding continuous curve segment between the peak of the first echo and an end point of the last echo among the M echoes;
or an integral area of a corresponding continuous curve segment between the start point of the first echo to the end point of the last echo among the M echoes.

In a possible implementation, the M echoes include a primary echo, a secondary echo and a tertiary echo.

In a possible implementation, the integral area is determined on the basis of all echo signals.

In a possible implementation, the first parameter includes: an incremental percentage; and the processing module 802 is specifically configured to:
obtain the integral area of the envelope curve corresponding to the echo signal with respect to the time axis; and
normalize the integral area of the envelope curve corresponding to the echo signal with respect to the time axis to obtain the incremental percentage.

Optionally, the processing module 802 is specifically configured to:
determine a first integral difference on the basis of a difference between the integral area of the envelope curve corresponding to the echo signal with respect to the time axis and a preset first integral area, where the preset first integral area is an integral area of an envelope curve corresponding to an echo signal, which is sent and received by the detection device after transmitting to a completely absorbing target surface to be cleaned, with respect to the time axis;
determine a second integral difference on the basis of a difference between a preset second integral area and the preset first integral area, where the preset second integral area is an integral area of an envelope curve corresponding to an echo signal, which is received by the detection device after transmitting to a completely non-absorbing target surface to be cleaned, with respect to the time axis; and
obtain a normalized value on the basis of a ratio of the first integral difference to the second integral difference.

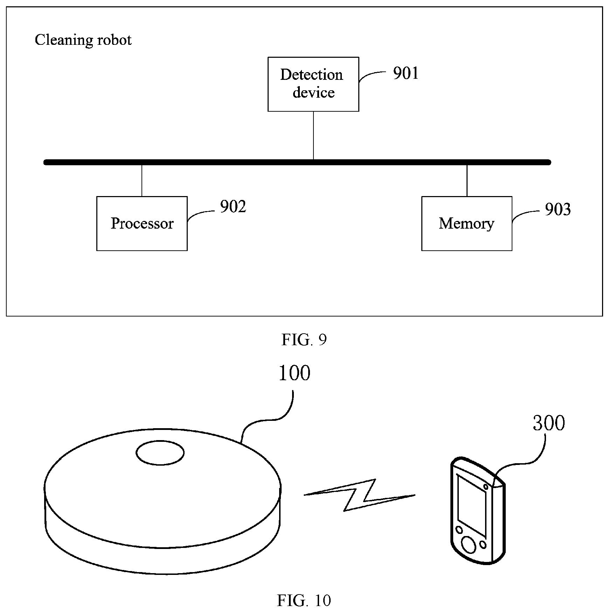

FIG. 9 is a structural schematic diagram of hardware of the cleaning robot according to an embodiment of the present application. As shown in FIG. 9, the cleaning robot includes:
a detection device 901, a processor 902 communicatively connected to the detection device 901, and a memory 903 communicatively connected to the processor 902.

The detection device 901 is configured to transmit an ultrasonic signal to a target surface to be cleaned, and to receive an echo signal returned from the target surface.

The memory 903 is configured to store computer-executable instructions.

The processor 902 is configured to execute the computer-executable instructions stored in the memory 903 on the basis of a detection result of the detection device 901 to implement the control method for a cleaning robot.

In the above embodiments, it should be understood that the processor may be a central processing unit (abbreviated as CPU), or may be another general purpose processor, a digital signal processor (abbreviated as DSP), an application specific integrated circuit (abbreviated as ASIC), etc. The general purpose processor may be a microprocessor, or the processor may be any conventional processor, etc. The steps of the method disclosed in combination with the present disclosure may be implemented directly by a hardware processor or by a combination of hardware and software modules in the processor.

The memory may include a high-speed RAM, or may further include a non-volatile memory (NVM), such as at least one disk memory.

A bus may be an industry standard architecture (ISA) bus, a peripheral component interconnect (PCI) bus, an extended industry standard architecture (EISA) bus, etc. The bus may be classified into an address bus, a data bus, a control bus, etc. For convenience of illustration, the bus in the drawings of the present application does not represent only one bus or one type of bus.

The above solutions provided by the embodiments of the present disclosure are described with respect to the functions implemented by an electronic device and a master control device.

It can be understood that in order to achieve the above functions, the electronic device or the master control device includes corresponding hardware structures and/or software modules that perform the respective functions.

With reference to units and algorithm steps of each example described in the embodiments disclosed in the present disclosure, the embodiments of the present disclosure can be implemented in the form of hardware or a combination of hardware and computer software. Whether a certain function is implemented by hardware or by hardware driven by the computer software depends on specific applications and design constraints of the technical solutions. Those skilled in the art can use different methods to implement the described functions for each particular application, but such implementation should not be considered to be beyond the scope of the technical solutions of the embodiments of the present disclosure.

The present application further provides a computer program product, which includes a computer program. The computer program implements, when executed by a processor, a control method for a robot.

The computer program product provided by this embodiment can execute the control method for a robot of the above embodiment, and the implementation principle and the technical effect of the computer program product are similar to those of the method embodiment and will not be repeated in this embodiment.

The present application further provides a computer-readable storage medium. The computer-readable storage medium stores computer-executable instructions. When a processor executes the computer-executable instructions, the above control method for a robot is implemented.

The computer-readable storage medium provided by this embodiment can execute the control method for a robot of the above embodiment, and the implementation principle and the technical effect of the computer program product are similar to those of the method embodiment and will not be repeated in this embodiment.

The present application further provides a cleaning system, including a cleaning robot 100 and a user terminal 300. The cleaning robot 100 is communicatively connected to the user terminal 300.

The cleaning robot 100 is further configured to send material information of a target surface to be cleaned to the user terminal 300 on the basis of the determined material category of the target surface.

Optionally, a presentation form of the material information of the target surface on the user terminal 300 comprises at least one of the following:
text information of a material, image information of the material, or voice information of the material.

The above computer-readable storage medium may be implemented by any type of volatile or non-volatile storage device or a combination thereof, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The readable storage medium may be any available medium that is accessible to a general-purpose or special-purpose computer.

An exemplary readable storage medium is coupled to the processor, enabling the processor to read information from and write information to the readable storage medium. Certainly, the readable storage medium may also be a part of the processor. The processor and the readable storage medium may be located in the application specific integrated circuits (ASIC). Of course, the processor and the readable storage medium may also exist as discrete components in the electronic device or the master control device.

It will be understood by those of ordinary skill in the art that all or some of the steps of the method embodiments may be implemented by hardware related to program instructions. The foregoing program may be stored in a computer-readable storage medium. When being executed, the program performs the steps of the above method embodiments. Moreover, the foregoing storage medium includes an ROM, an RAM, a magnetic or optical disk, and various media in which program codes can be stored.

It should be noted that user information (including but not limited to user device information, user personal information, etc.) and data (including but not limited to data for analysis, stored data, data displayed, etc.) involved in the present application are the information and data authorized by a user or duly authorized by all parties, the collection, use and processing of such data must comply with the relevant laws, regulations and standards, and corresponding operation entries are provided for the user to accept or decline the authorization.

Finally, it should be noted that the above embodiments are merely used for illustrating rather than limiting the technical solutions of the present disclosure. Although the present disclosure has been illustrated in detail with reference to the foregoing embodiments, it should be understood by those of ordinary skill in the art that the technical solutions described in the above embodiments can still be modified, or some or all of the technical features in the technical solutions can be equivalently substituted; and these modifications or substitutions do not make the essence of the corresponding technical solutions depart from the scope of the technical solutions of the embodiments of the present disclosure.

## Claims

1. A material identification method for a cleaning robot, wherein the robot comprises a detection device configured to transmit an ultrasonic signal to a target surface to be cleaned, and to receive an echo signal returned from the target surface; and the method comprises:
determining a material category of the target surface on the basis of a first parameter of the echo signal detected by the detection device, wherein the first parameter is configured to characterize an integral area of an envelope curve corresponding to the echo signal with respect to a time axis.

2. The method according to claim 1, wherein the first parameter comprises:
the integral area of the envelope curve corresponding to the echo signal with respect to the time axis;
or an incremental percentage corresponding to the integral area of the envelope curve corresponding to the echo signal with respect to the time axis.

3. The method according to claim 2, wherein the integral area is determined on the basis of M echoes, wherein M is greater than or equal to 2.

4. The method according to claim 3, wherein the integral area comprises:
an integral area of a corresponding continuous curve segment between a peak of the first echo and an end point of the second echo among the M echoes;
or an integral area of a corresponding continuous curve segment between a start point of the first echo to the end point of the second echo among the M echoes.

5. The method according to claim 4, wherein the M echoes comprise a primary echo and a secondary echo.

6. The method according to claim 3, wherein M is greater than 2; and the integral area comprises:
an integral area of a corresponding continuous curve segment between a peak of the first echo and a peak of the last echo among the M echoes;
or an integral area of a corresponding continuous curve segment between a start point of the first echo and the peak of the last echo among the M echoes;
or an integral area of a corresponding continuous curve segment between the peak of the first echo and an end point of the last echo among the M echoes;
or an integral area of a corresponding continuous curve segment between the start point of the first echo to the end point of the last echo among the M echoes.

7. The method according to claim 6, wherein the M echoes comprise a primary echo, a secondary echo and a tertiary echo.

8. The method according to claim 2, wherein the integral area is determined on the basis of all echo signals.

9. The method according to claim 2, wherein the first parameter comprises: an incremental percentage; and the method further comprises:
obtaining the integral area of the envelope curve corresponding to the echo signal with respect to the time axis; and
normalizing the integral area of the envelope curve corresponding to the echo signal with respect to the time axis to obtain the incremental percentage.

10. The method according to claim 9, wherein normalizing the integral area of the envelope curve corresponding to the echo signal with respect to the time axis comprises:
determining a first integral difference on the basis of a difference between the integral area of the envelope curve corresponding to the echo signal with respect to the time axis and a preset first integral area, wherein the preset first integral area is an integral area of an envelope curve corresponding to an echo signal, which is sent and received by the detection device after transmitting to a completely absorbing target surface to be cleaned, with respect to the time axis;
determining a second integral difference on the basis of a difference between a preset second integral area and the preset first integral area, wherein the preset second integral area is an integral area of an envelope curve corresponding to an echo signal, which is received by the detection device after transmitting to a completely non-absorbing target surface to be cleaned, with respect to the time axis; and
obtaining a normalized value on the basis of a ratio of the first integral difference to the second integral difference.

11. A processor for a cleaning robot, wherein the robot comprises a detection device communicatively connected to the processor;
the detection device is configured to transmit an ultrasonic signal to a target surface to be cleaned, and to receive an echo signal returned from the target surface; and
the processor comprises:
an acquisition module for acquiring the echo signal detected by the detection device; and
a processing module for determining a material category of the target surface on the basis of a first parameter of the echo signal detected by the detection device, wherein the first parameter is configured to characterize an integral area of an envelope curve corresponding to the echo signal with respect to a time axis.

12. The processor according to claim 11, wherein the first parameter comprises:
the integral area of the envelope curve corresponding to the echo signal with respect to the time axis;
or an incremental percentage corresponding to the integral area of the envelope curve corresponding to the echo signal with respect to the time axis.

13. The processor according to claim 12, wherein the integral area is determined on the basis of M echoes, wherein M is greater than or equal to 2.

14. The processor according to claim 13, wherein the integral area comprises:
an integral area of a corresponding continuous curve segment between a peak of the first echo and an end point of the second echo among the M echoes;
or an integral area of a corresponding continuous curve segment between a start point of the first echo to the end point of the second echo among the M echoes.

15. The processor according to claim 14, wherein the M echoes comprise a primary echo and a secondary echo.

16. The processor according to claim 15, wherein M is greater than 2; and the integral area comprises:
an integral area of a corresponding continuous curve segment between a peak of the first echo and a peak of the last echo among the M echoes;
or an integral area of a corresponding continuous curve segment between a start point of the first echo and the peak of the last echo among the M echoes;
or an integral area of a corresponding continuous curve segment between the peak of the first echo and an end point of the last echo among the M echoes;
or an integral area of a corresponding continuous curve segment between the start point of the first echo to the end point of the last echo among the M echoes.

17. The processor according to claim 16, wherein the M echoes comprise a primary echo, a secondary echo and a tertiary echo.

18. The processor according to claim 12, wherein the integral area is determined on the basis of all echo signals.

19. The processor according to claim 12, wherein the first parameter comprises: an incremental percentage; and the method further comprises:
obtaining the integral area of the envelope curve corresponding to the echo signal with respect to the time axis; and
normalizing the integral area of the envelope curve corresponding to the echo signal with respect to the time axis to obtain the incremental percentage.

20. The processor according to claim 19, wherein normalizing the integral area of the envelope curve corresponding to the echo signal with respect to the time axis comprises:
determining a first integral difference on the basis of a difference between the integral area of the envelope curve corresponding to the echo signal with respect to the time axis and a preset first integral area, wherein the preset first integral area is an integral area of an envelope curve corresponding to an echo signal, which is sent and received by the detection device after transmitting to a completely absorbing target surface to be cleaned, with respect to the time axis;
determining a second integral difference on the basis of a difference between a preset second integral area and the preset first integral area, wherein the preset second integral area is an integral area of an envelope curve corresponding to an echo signal, which is received by the detection device after transmitting to a completely non-absorbing target surface to be cleaned, with respect to the time axis; and
obtaining a normalized value on the basis of a ratio of the first integral difference to the second integral difference.

21. A control method for a cleaning robot, wherein the robot comprises a detection device configured to transmit an ultrasonic signal to a target surface to be cleaned, and to receive an echo signal returned from the target surface; and the method comprises:
determining a material category of the target surface on the basis of a material identification method of any one of claims 1-10 during execution of a target task on the target surface, the target task comprising at least a cleaning task or a mapping task; and
executing the target task on the target surface on the basis of the material category of the target surface.

22. A cleaning robot, comprising a detection device, a processor communicatively connected to the detection device, and a memory communicatively connected to the processor, wherein
the detection device is configured to transmit an ultrasonic signal to a target surface to be cleaned, and to receive an echo signal returned from the target surface;
the memory is configured to store computer-executable instructions; and
the processor is configured to execute the computer-executable instructions stored in the memory on the basis of a detection result of the detection device, to implement a control method for a cleaning robot of claim 21.

23. A cleaning system, comprising a cleaning robot of claim 22, and a user terminal, wherein the robot is communicatively connected to the user terminal; and
the robot is further configured to send material information of the target surface to the user terminal on the basis of the determined material category of the target surface.

24. The cleaning system according to claim 23, wherein a presentation form of the material information of the target surface on the user terminal comprises at least one of the following:
text information of a material, image information of the material, or voice information of the material.
